# EUROPÄISCHE PATENTSCHRIFT

(11) **EP 3 824 128 B1**
(45) Veröffentlichungstag und Bekanntmachung des Hinweises auf die Patenterteilung: **12.07.2023**
(21) Anmeldenummer: 19739307.7
(22) Anmeldetag: 17.07.2019
(51) Int. Cl.: D04H 3/013, D04H 3/02, D01D 5/06, D01D 7/00, D01F 2/00

(54) **VERFAHREN UND VORRICHTUNG ZUR LÖSUNGSMITTELABSCHEIDUNG AUS DER PROZESSLUFT BEI DER SPINNVLIESHERSTELLUNG**
METHOD AND APPARATUS FOR RECOVERING SOLVENT FROM PROCESS AIR DURING THE PRODUCTION OF A SPUNBOND
PROCÉDÉ ET DISPOSITIF DE SÉPARATION DE SOLVANT DE L'AIR DE PROCESSUS LORS DE LA FABRICATION DE NON-TISSÉ PAR FILATURE

(30) Priorität: 17.07.2018 EP 18183887
(43) Veröffentlichungstag der Anmeldung: 26.05.2021
(73) Patentinhaber: Lenzing Aktiengesellschaft, 4860 Lenzing (AT)
(72) Erfinder: SAGERER-FORIC, Ibrahim, 4840 Vöcklabruck (AT)
(74) Vertreter: Schwarz & Partner Patentanwälte GmbH
(86) Internationale Anmeldenummer: PCT/EP2019/069239
(87) Internationale Veröffentlichungsnummer: WO 2020/016296

(56) Entgegenhaltungen:
- EP-A1- 1 170 411
- WO-A1-2006/035458
- WO-A1-2012/102398
- WO-A1-2018/071928

## Beschreibung

Die Erfindung betrifft eine Vorrichtung zum Ablegen von Filamenten zu einem Spinnvlies, Entfeuchten des Spinnvlieses und Absaugung der mit Lösungs- und Koagulationsmittel beladenen Prozessluft, umfassend eine Fördervorrichtung, welche ein Förderband zum Transport von Spinnvlies in eine Transportrichtung aufweist, wobei auf der Oberseite des Förderbands eine Ablagefläche für das Filament angeordnet ist, wobei die Fördervorrichtung zumindest im Bereich der Ablagefläche durchlässig für Gase und Flüssigkeiten ist, wobei auf der Unterseite des Förderbands zumindest unterhalb der Ablagefläche eine Entfeuchtungsvorrichtung vorgesehen ist, wobei oberhalb des Förderbandes neben der Ablagefläche zumindest eine Absaugvorrichtung vorgesehen ist. Außerdem betrifft die Erfindung ein Verfahren zum Ablegen von Filamenten zu einem Spinnvlies, Entfeuchten des Spinnvlieses, Absaugen der mit Lösungs- und Koagulationsmittel beladenen Prozessluft, unterhalb und oberhalb des Förderbandes, Abscheidung und Rückgewinnung des Lösungs- und Koagulationssmittels aus der Abluft.

### HINTERGRUND DER ERFINDUNG

Seit einigen Jahrzehnten werden Spinnvliese nach dem Spunbond- oder nach dem Meltblown-Verfahren hergestellt. Beim Spunbond-Verfahren, wie beispielsweise in GB 2 114 052 und EP 3 088 585 beschrieben, werden Filamente durch eine Düse extrudiert und durch eine darunterliegende Verstreckungseinheit abgezogen und verstreckt.

Im Gegensatz dazu werden die extrudierten Filamente beim Meltblown-Verfahren, wie beispielsweise in US 5,080,569, US 4,380,570 und US 5,695,377 beschrieben, bereits beim Austritt aus der Düse von heißer, schneller Prozessluft mitgerissen und verstreckt. Bei beiden Technologien werden die Filamente auf einer Ablagefläche, beispielsweise einem perforierten Förderband, in Wirrlage zu einem Vliesstoff abgelegt, zu Nachbearbeitungsschritten transportiert und schließlich als Vliesrollen aufgewickelt.

Bekannte Absaugeinheiten sind z.B. in US 7,001,567, EP 1 079 012, EP 1 340 844 oder US 6,331,268 beschrieben.

Die bekannten Verfahren und Vorrichtungen sind hauptsächlich für die Ablage von Kunststofffilamenten wie beispielsweise Polypropylen (PP) entwickelt worden. Diese Filamente sind auf der Ablagefläche leicht beweglich und können bei schlechter Absaugung zu schlechter Vliesformung führen. Daher wird die gesamte Prozessluft durch die Ablagefläche gesaugt, um eine Reflektion der Prozessluft zu verhindern.

Im Gegensatz zu den bereits sehr gut bekannten Spundbond- und Meltblown-Verfahren für Thermoplaste muss die Absaugeinheit für die Herstellung von cellulosischen Spinnvliesen, beispielsweise aus Lyocell-Spinnmasse, zusätzliche Aufgaben lösen. Die Herstellung von cellulosischen Spinnvliesen mit der Spunbond-Technologie ist beispielsweise in US 8,366,988 und WO 2006/035458 und nach der Meltblown-Technologie in US 6,358,461 und US 6,306,334 beschrieben. Dabei wird die Lyocell-Spinnmasse wie bei den bereits bekannten Spunbond- und Meltblownverfahren verstreckt, aber die Filamente werden zusätzlich vor der Vliesablage mit einem Koagulationsmittel in Kontakt gebracht, um die Zellulose zu regenerieren und formstabile Filamente zu erzeugen. Die nassen Filamente werden durch die Turbulenz der Luft in Wirrlage als Vliesstoff abgelegt.

Da die verwendeten Spinnmassen Zellstoffgehalte von 3 bis 17% aufweisen, wird bei cellulosischen Spinnvliestechnologien mehr Prozessluft pro kg Produkt benötigt, als bei der Herstellung von thermoplastischen Spinnvliesen. Das führt dazu, dass bei gleicher Produktivität im Vergleich zu thermoplastischen Spinnvliesanlagen mehr Prozessluft durch die Düse gefördert und auch samt dem Koagulations- und Lösungsmittel abgesaugt werden muss. Es prallt also mehr Prozessluft mit höherer Geschwindigkeit auf die gleiche Ablagefläche und diese Prozessluft ist auch noch mit viel Flüssigkeit beladen.

In weiterer Folge muss das Lösungs- und Koagulationsmittel, welches in feinen Tropfen im Abluftstrom verteilt vorliegt, auch abgeschieden werden. Speziell bei der Herstellung von Spinnvliesen aus Lyocell-Spinnmasse soll der Verlust des Lösungsmittels NMMO soweit wie möglich verringert und die Rückgewinnung maximiert werden. Das dient nicht nur der Wirtschaftlichkeit der Produktionsanlage, sondern auch der Einhaltung von Behördenauflagen im Bereich der Abluftgrenzwerte.

Aufgrund des erhöhten Prozessluftstroms bei der Herstellung von cellulosischen Spinnvliesen und der hohen Lösungs- und Koagulationsmittelmengen, die zuerst abgesaugt und in weiterer Folge abgeschieden werden müssen, können die bisher bekannten Spinnvliesanlagen nicht verwendet werden, da weder die für den wirtschaftlichen Betrieb notwendige Produktivität und Rückgewinnung des Lösungsmittels, noch die Behördenauflagen für die Reinheit der Abluft eingehalten werden können.

### KURZBESCHREIBUNG DER ERFINDUNG

Im Stand der Technik wird angegeben, dass bei der Herstellung von cellulosischen Spinnvliesen die Prozessluft durch die Ablagefläche abgesaugt wird, um die Ablage der Filamente zu einem Vliesstoff zu ermöglichen. Die Absaugeinheit muss dabei die Prozessluft so gleichmäßig und wirtschaftlich wie möglich durch die Ablagefläche absaugen, ohne dass die abgelegten Filamente durch reflektierende Luft verschoben werden und eine Ungleichmäßigkeit im Vliesstoff entsteht. Die Reflektion der Prozessluft sollte möglichst vermieden werden.

Aufgrund der bereits beschriebenen Unterschiede zwischen der Spinnvliesherstellung aus Thermoplasten und aus Cellulose kann mit den bekannten Vorrichtungen aber weder die gesamte Lösungs- und Koagulationsmittel-beladene Prozessluftmenge energiesparsam abgesaugt, noch rückgewonnen werden. Um die erhöhten Ansprüche zu erfüllen und einen kommerziellen und umwelttechnisch sinnvollen Betrieb einer Spinnvliesanlage für cellulosische Spinnvliese zu ermöglichen, ist es die Aufgabe der vorliegenden Erfindung, die gestellten Ansprüche an die Wirtschaftlichkeit und den Umweltschutz zu erfüllen.

Ziel der vorliegenden Erfindung ist es, die Lösungs- und Koagulationsmittel-beladene Prozessluft bei der Herstellung von cellulosischen Spinnvliesen so wirtschaftlich wie möglich zu entfernen, ohne die Vliesablage negativ zu beeinflussen.

Erfindungsgemäß wird diese Aufgabe gelöst durch eine Vorrichtung zum Ablegen von Filamenten zu einem Spinnvlies, Entfeuchten des Spinnvlieses und Absaugung der mit Lösungs- und Koagulationsmittel beladenen Prozessluft, umfassend eine Fördervorrichtung zum Transport des Spinnvlieses in eine Transportrichtung, wobei die Fördervorrichtung eine Ablagefläche für das Filament aufweist, wobei die Fördereinrichtung zumindest im Bereich der Ablagefläche durchlässig für Gase und Flüssigkeiten ist, wobei unterhalb der Ablagefläche der Fördervorrichtung eine primäre Entfeuchtungsvorrichtung vorgesehen ist, dadurch gekennzeichnet, dass vor und/oder nach und/oder seitlich der Ablagefläche zumindest eine obere Absaugvorrichtung angeordnet ist.

Die Vorrichtung weist also in Maschinenrichtung vor oder nach der Ablagefläche, oder seitlich neben der Ablagefläche zumindest eine obere Absaugvorrichtung auf, die von der Ablagefläche reflektierte Prozessluft absaugt.

Die Aufgabe wird außerdem durch ein Verfahren zum Ablegen von Filamenten zu einem Spinnvlies, Entfeuchten des Spinnvlieses, Absaugung der mit Lösungs- und/oder Koagulationsmittel beladenen Prozessluft, Abscheiden und Rückgewinnen des Koagulations- bzw. Lösungsmittels aus der Prozessluft, wobei Filamente aus einem Spinnsystem ausgetragen und auf einer Ablagefläche einer Fördervorrichtung zu einem Spinnvlies abgelegt und anschließend weitertransportiert werden, wobei die Filamente auf der Ablagefläche von der Unterseite der Fördervorrichtung durch Verringern des Drucks entfeuchtet werden, dadurch gekennzeichnet, dass von der Fördervorrichtung reflektierte Prozessluft zumindest in einem Abschnitt vor und/oder nach und/oder seitlich neben der Ablagefläche oberhalb der Fördervorrichtung abgesaugt wird.

Weiters kann in einem nächsten Schritt vorgesehen sein, dass das Koagulations- bzw. Lösungsmittel aus dem Abluftstrom abgeschieden und rückgewonnen wird.

In einem Aspekt der Erfindung ist außerdem eine Anordnung, umfassend eine Vorrichtung zur Herstellung von cellulosischem Spinnvlies und eine Vorrichtung der vorgenannten Art vorgesehen.

Nachfolgend werden die Vorrichtung, das Verfahren und die Anordnung parallel näher beschrieben und vorteilhafte Ausführungsvarianten erörtert.

Bei der Vorrichtung zum Ablegen von Filamenten zu einem Spinnvlies, Entfeuchten von Spinnvlies und Abführen der mit Lösungs- und Koagulationsmittel beladenen Prozessluft, wird Filament, welches zum Beispiel aus einem Spinnsystem stammt, auf die Ablagefläche geführt. Zur Regeneration von Cellulose der aus dem Spinnsystem extrudierten Spinnmassefilamente zu einem Spinnvlies wird das Extrudat beispielsweise über Düsen mit Koagulationsflüssigkeit besprüht. Das nunmehr feuchte Spinnvlies wird auf der Ablagefläche abgelegt. Zeitgleich strömt die für die Verstreckung benötigte Prozessluft auf die Ablagefläche. Die Ablagefläche befindet sich auf einer Fördervorrichtung, welche bevorzugt ein Förderband zum Transport von Spinnvlies in eine Transportrichtung aufweist. Auf der Oberseite des Förderbands ist nunmehr die Ablagefläche für das Filament angeordnet, wobei die Fördervorrichtung zumindest im Bereich der Ablagefläche durchlässig für Gase und Flüssigkeiten ist. Auf der Unterseite des Förderbands ist zumindest unterhalb der Ablagefläche eine primäre Entfeuchtungsvorrichtung vorgesehen, welche zum Beispiel eine Vakuumbox aufweist. Oberhalb dieses Abschnitts ist zumindest eine obere Absaugvorrichtung vorgesehen. Erfindungsgemäß wird durch die primäre Entfeuchtungsvorrichtung hauptsächlich Lösungs- und Koagulationsmittel entfernt und nur so viel Prozessluft, wie für eine stabile und fehlerlose Vliesablage benötigt wird. Der restliche Teil der Prozessluft wird reflektiert und von zumindest einer Absaugvorrichtung oberhalb der Fördervorrichtung abgefangen und abgesaugt. Die Fördervorrichtung kann zumindest in einem Abschnitt in Maschinenrichtung vor oder nach der Ablagefläche ebenfalls gas- und flüssigkeitsdurchlässig sein. Dieser Bereich kann eine sekundäre Entfeuchtungsvorrichtung aufweisen, mit der einerseits auch Lösungs- und Koagulationsmittel aus dem Spinnvlies entfernt wird und andererseits das Spinnvlies festgehalten wird, damit es nicht von der darüber liegenden Absaugvorrichtung vom Förderband abgehoben und abgesaugt wird.

In einer Ausführungsvariante ist vorgesehen, dass die obere Absaugvorrichtung im Betrieb eine Absaugrichtung in Transportrichtung oder gegen Transportrichtung oder in und gegen Transportrichtung, in Richtung der Ablagefläche, aufweist.

Eine Ausführungsvariante sieht vor, dass die obere Absaugvorrichtung im Betrieb eine Absaugrichtung quer zur Transportrichtung, in Richtung der Ablagefläche, aufweist.

Unter dem Begriff, dass die Vorrichtung oberhalb dieses Abschnitts zumindest eine obere Absaugvorrichtung aufweist, wird im Rahmen der Erfindung verstanden, dass zuvor von der Ablagefläche reflektierte Prozessluft oberhalb des Förderbandes abgesaugt wird.

Unabhängig von der genauen Ausgestaltung der oberen Absaugvorrichtung(en) ist vorzugsweise jeder Absaugvorrichtung eine sekundäre Entfeuchtungsvorrichtung unterhalb der Ablagefläche zugeordnet. Dadurch wird das Spinnvlies einerseits auf der Fördervorrichtung fixiert und entfeuchtet und andererseits die reflektierte Prozessluft abgesaugt.

Bevorzugt ist vorgesehen, dass sowohl den Entfeuchtungsvorrichtungen als auch den Absaugvorrichtungen ein Feuchtigkeitsabscheider oder Tropfenabscheider nachgeschaltet ist. Dadurch kann Lösungs- oder Koagulationsmittel aus der Prozessluft und/oder aus dem Spinnvlies abgeschieden und rückgewonnen werden.

In einer Ausführungsvariante ist vorgesehen, dass die obere Absaugvorrichtung in Transportrichtung der Fördervorrichtung vor der Ablagefläche angeordnet ist.

In einer anderen Ausführungsvariante ist vorgesehen, dass die obere Absaugvorrichtung in Transportrichtung der Fördervorrichtung nach der Ablagefläche angeordnet ist.

In einer Ausführungsvariante ist vorgesehen, dass die obere Absaugvorrichtung in Transportrichtung der Fördervorrichtung seitlich neben der Ablagefläche angeordnet ist.

Besonders bevorzugt ist eine obere Absaugvorrichtung in Transportrichtung vor der Ablagefläche angeordnet und eine obere Absaugvorrichtung in Transportrichtung nach der Ablagefläche angeordnet.

Noch mehr bevorzugt ist eine obere Absaugvorrichtung in Transportrichtung vor und nach der Ablagefläche und jeweils eine obere Absaugvorrichtung seitlich neben der Ablagefläche angeordnet.

In einer bevorzugten Ausführungsvariante bilden die oberen Absaugvorrichtungen ein Viereck um die Ablagefläche und saugen somit die reflektierte Prozessluft in 360° Winkel ab.

### DETAILLIERTE BESCHREIBUNG DER ERFINDUNG

In der vorliegenden Erfindung wird ein Verfahren bereitgestellt, das es erlaubt, die Ablagefläche hauptsächlich für die Entfeuchtung des Spinnvlieses zu verwenden und die Prozessluft von der Ablagefläche abprallen zu lassen, die reflektierte Prozessluft abzusaugen und anschließend gegebenenfalls das Lösungs- und Koagulationsmittel abzuscheiden und zum Koagulationsvorlagebehälter zurückzuführen bzw. in weiterer Folge der Lösungsmittelaufarbeitung zuzuführen.

Die erfindungsgemäße Vorrichtung ermöglicht die Entfeuchtung des Spinnvlieses, die Reflektion der Prozessluft und das Absaugen der reflektierten Prozessluft neben der Ablagefläche über dem Förderband.

Um die Erfindung besser zu veranschaulichen, werden die wesentlichen Merkmale anhand von bevorzugten Ausführungsformen des erfindungsgemäßen Verfahrens und der erfindungsgemäßen Vorrichtung in folgenden Figuren dargestellt.
- Fig. 1: zeigt schematisch eine Vorrichtung gemäß der Erfindung

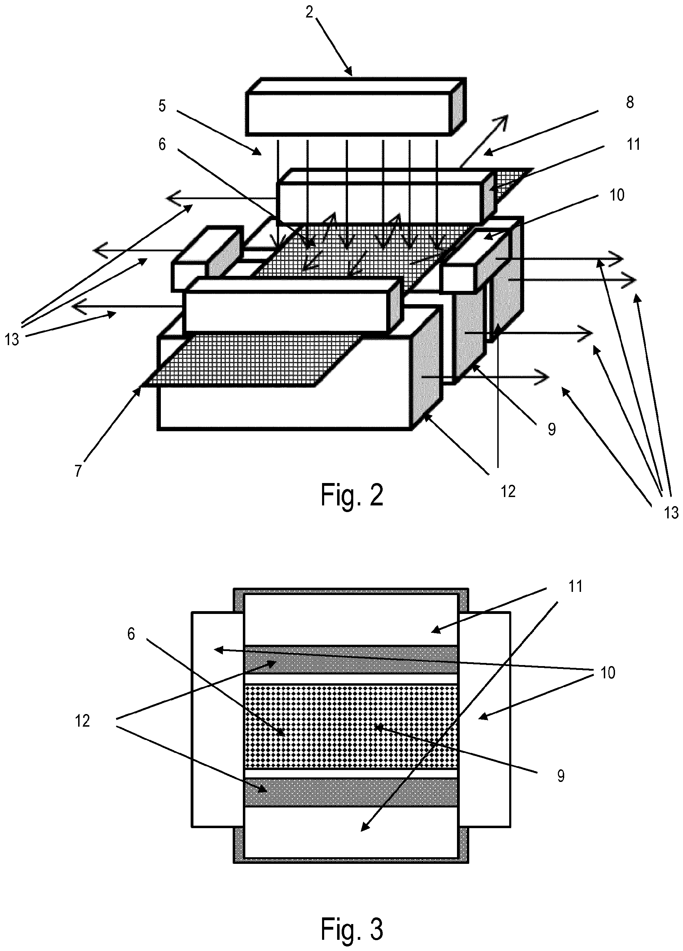

- Fig. 2: zeigt eine Schrägansicht der Vorrichtung gemäß Fig. 1 und
- Fig. 3: zeigt eine Draufsicht auf diese Vorrichtung.
- Fig. 4: zeigt ein Schaubild einer Ausführungsvariante der Erfindung.

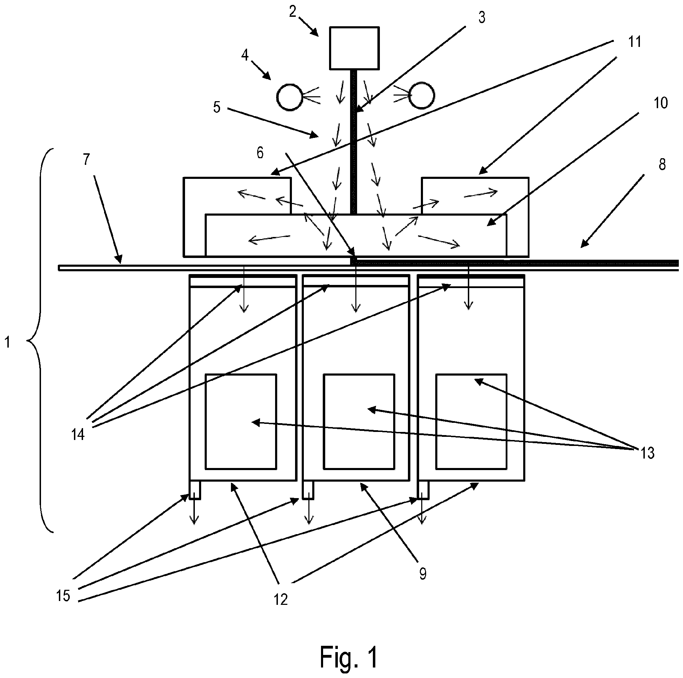

Figur 1 zeigt die erfindungsgemäße Vorrichtung 1, mit der die durch das Spinnsystem 2 extrudierten und verstreckten Spinnmassefilamente 3 zu einem Spinnvlies 8 abgelegt und entfeuchtet werden können. Dabei werden die Filamente 3 mit Koagulationsflüssigkeit 4 besprüht, um die Cellulose zu regenerieren und die Form der Filamente 3 zu stabilisieren, bevor die Prozessluft 5 und die Filamente 3 auf die Ablagefläche 6 aufprallen und das Spinnvlies 8 geformt wird.

Die Koagulationsflüssigkeit kann im Falle vom Lyocell-Prozess ein Gemisch aus vollentsalztem Wasser und NMMO, mit einem Gewichtsanteil von 0% bis 40% NMMO, bevorzugt 10% bis 30% NMMO, noch mehr bevorzugt 15 bis 25% NMMO, sein. Durch die Ablagefläche 6 und die Entfeuchtungsvorrichtung 9 wird das Spinnvlies 8 entwässert und der Anteil vom Koagulations- und Lösungsmittel im Spinnvlies 8 deutlich reduziert.

Es hat sich gezeigt, dass bei hoher Produktivität des Spinnsystems 2 zwischen 10 kg/h/m und 1000 kg/h/m Cellulosedurchsatz die primäre Entfeuchtungsvorrichtung 9 durch die hohe Menge an Koagulations- und Lösungsmittel bereits so belastet wird, dass die Prozessluftmenge nicht wie bei den dem Stand der Technik entsprechenden Vorrichtungen und Verfahren komplett abgesaugt werden kann und nach dem Auftreffen auf der Ablagefläche 6 in alle Richtungen reflektiert. Überraschenderweise haften aber die cellulosischen Filamente 3 so gut auf der Ablagefläche 6, dass die Vliesablage trotzdem möglich ist.

Erfindungsgemäß wird dieser Reflexionseffekt insofern genutzt, dass die Ablagefläche 6 hauptsächlich der Entfernung des Koagulations- und Lösungsmittelgemisches aus dem Spinnvlies 8 durch die primäre Entfeuchtungsvorrichtung 9 dient und das Reflektieren des Koagulations- und Lösungsmittelbeladenen, heißen und schnellen Luftstroms zugelassen wird. Ein Vorteil der erfindungsgemäßen Vorrichtung ist die hohe Energieeinsparung, da nicht die gesamte Prozessluftmenge 5 mit hohen Energieaufwand durch die primäre Entfeuchtungsvorrichtung 9 abgesaugt wird, sondern oberhalb der Fördervorrichtung 7 mit deutlich weniger Druckverlust entfernt werden kann.

Erfindungsgemäß konnte die reflektierende Prozessluft 5 durch obere Absaugvorrichtungen 11 in und entgegen der Förderbandrichtung (MD Boxen) und durch obere Absaugvorrichtungen 10 quer zur Förderbandrichtung (CD Boxen) abgefangen und abgesaugt werden. Damit konnte verhindert werden, dass die Koagulations- und Lösungsmittelbeladene Prozessluft 5 im Anlagenraum verteilt wird. Somit konnte sowohl das Lösungsmittel rückgewonnen, als auch die Abluftgrenzwerte eingehalten werden.

Daraus hat sich ein weiterer Vorteil der erfindungsgemäßen Vorrichtung ergeben: Da die reflektierte Prozessluft mit hoher Geschwindigkeit in die oberen Absaugvorrichtungen 10, 11 strömt und der Druckverlust sehr gering ist, wird nur sehr wenig Energie für den Weitertransport der Prozessluft 5 benötigt. Der Sogeffekt der oberen Absaugvorrichtung ist so stark, dass erfindungsgemäß eine sekundäre Entfeuchtungsvorrichtung 12 verwendet werden kann, damit das Spinnvlies 8 nicht in die Absaugvorrichtungen 10, 11 mitgerissen wird. Im Ausführungsbeispiel sind zwei sekundäre Entfeuchtungsvorrichtungen 12 gezeigt.

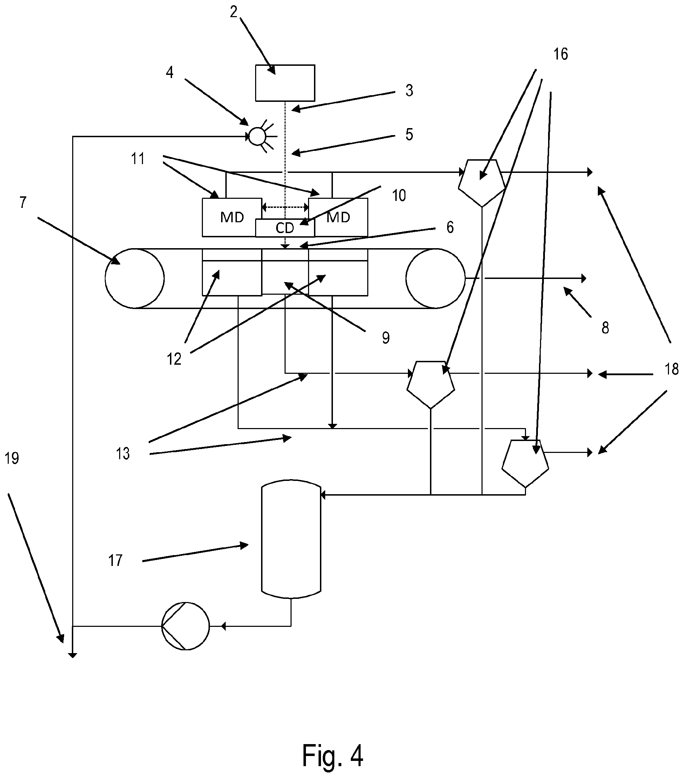

Erfindungsgemäß wird ein Teil der Koagulations- und Lösungsmittelmenge aus dem Spinnvlies 8 über die primäre Entfeuchtungsvorrichtung 9 und die sekundären Entfeuchtungsvorrichtungen 12 und der andere Teil aus der reflektierten Koagulations- und Lösungsmittelbeladenen Prozessluft 5 über die oberen Absaugvorrichtungen 10, 11 abgesaugt. Ein Teil der Koagulations- und Lösungsmittelmenge wird aus den Entfeuchtungsvorrichtungen 9, 12 über die Entwässerungsleitungen 15 abgeschieden, während die Koagulations- und Lösungsmitteltröpfchen durch Tropfenabscheider 16 aus der Abluft entfernt werden. Die abgeschiedene Koagulations- und Lösungsmittelmenge kann im Koagulationsvorlagebehälter 17 gesammelt werden und entweder wieder zum Koagulationsflüssigkeits-Sprühsystem gepumpt oder zur Lösungsmittelaufarbeitung 19 gefördert werden. Der Lösungsmittelkreislauf kann somit wie in Fig. 4 dargestellt geschlossen und das Lösungsmittel kann rückgewonnen und wiederverwendet werden. Die Abluft 18 kann nach den Tropfenabscheidern 16 noch weiteren Reinigungsschritten zugeführt werden.

Die wirtschaftlichen und umwelttechnischen Vorteile werden erstens durch die Verwendung der erfindungsgemäßen Vorrichtung 1 zum Entfeuchten des Spinnvlieses 8 und der Absaugung der Prozessluft 5 erreicht, da die Absaugleistung verringert werden kann und zweitens durch die Verwendung des in Fig. 4 dargestellten erfindungsgemäßen Verfahrens zur Lösungsmittelabscheidung und Rückgewinnung ermöglicht.

Das Spinnvlies 8 wird auf dem Förderband der Fördereinrichtung 7 entweder zum nächsten Spinnsystem 2 transportiert, um mehrlagige Spinnvliese zu erzeugen, oder gewaschen, ggf. verfestigt, getrocknet, ggf. nachbehandelt und abschließend zu Vliesrollen aufgewickelt.

Das erfindungsgemäße Verfahren kann für die Rückgewinnung von unterschiedlichsten Lösungsmitteln und ionischen Flüssigkeiten, die für die Herstellung von cellulosischen Spinnvliesen verwendet werden können, bevorzugt tertiäre Aminoxide, noch mehr bevorzugt NMMO, verwendet werden.

Die vorliegende Erfindung kann für die Entfeuchtung und die Absaugung von Prozessluft bei der Herstellung von cellulosischen Spinnvliesen nach dem Spunbond-Verfahren und nach dem Meltblown-Verfahren verwendet werden. Dabei können die Zellstoffdurchsätze pro Spinnsystem 2 im Bereich von 10 kg/h/m bis 1000 kg/h/m, bevorzugt 20 kg/h/m bis 500 kg/h/m, noch mehr bevorzugt von 30 kg/h/m bis 300 kg/h/m liegen. Die spezifische Prozessluftmenge pro kg Zellstoff kann im Bereich von 30 Nm³/kg bis 1000 Nm³/kg, bevorzugt 50 Nm³/kg bis 700 Nm³/kg, noch mehr bevorzugt 70 Nm³/kg bis 400 Nm³/kg liegen (Die Einheit "Nm³" bedeutet "Normkubikmeter").

Die extrudierten Filamente 3, die auf der Auflagefläche 6 abgelegt werden, können Durchmesser im Bereich von 0,1µm bis 100µm, bevorzugt 1µm bis 40µm, noch mehr bevorzugt 3µm bis 30µm aufweisen.

Der spezifische Koagulationsflüssigkeitsdurchsatz pro kg Zellstoff durch das Sprühsystem 4 kann im Bereich von 2 L/kg bis 300 L/kg, bevorzugt 10 L/kg bis 200 L/kg, noch mehr bevorzugt 20 L/kg bis 150 L/kg liegen. Dabei kann das Koagulationsmittel über Einstoffdüsen, Zweistoffdüsen, oder andere Arten, die dem Fachmann bekannt sind zerstäubt werden.

Je weiter der Abstand zwischen dem Spinnsystem 2 und der Ablagefläche 6 ist, desto geringer ist die Aufprallgeschwindigkeit, aber desto höher die Luftmenge, die abgesaugt werden muss, da Umgebungsluft mit eingezogen wird. Der Abstand zwischen Spinnsystem 2 und Ablagefläche 6 kann zwischen 0,1 und 5 m, bevorzugt 0,3 und 4 m, noch mehr bevorzugt zwischen 0,5 und 3 m liegen. Die Geschwindigkeit der Prozessluft 5 beim Aufprall kann zwischen 5 m/s und 250 m/s, bevorzugt zwischen 10 m/s und 150 m/s, noch mehr bevorzugt zwischen 15 m/s und 50 m/s liegen.

Die Ablagefläche 6 bildet beispielweise ein gewebtes Förderband, welches für die Entwässerung geeignet ist. Das Förderband liegt auf Vakuumplatten 14 auf und wird dadurch unterstützt, um dem Staudruck der Prozessluft 5 standhalten zu können. Die Vakuumplatten 14 können verschiedenste Lochformen aufweisen, um den Entwässerungseffekt zu verstärken und das Spinnvlies 8 zu stabilisieren (nicht näher dargestellt). Der abgelegte Vliesstoff 8 kann Flächengewichte im Bereich von 5 g/m² bis 500 g/m², bevorzugt 10 g/m² bis 300 g/m², noch mehr bevorzugt 15 g/m³ bis 200 g/m² aufweisen. Bei höheren Flächengewichten, feineren Filamentdurchmessern, hohen Koagulationsflüssigkeitsmengen, hohen Prozessluftmengen, geringem Abstand zwischen Spinnsystem 2 und Ablagefläche 6, Förderbändern mit geringer Luftdurchlässigkeit und mehreren Vliesstofflagen übereinander, wird immer mehr Prozessluft 5 reflektiert und durch die Absaugvorrichtungen 10, 11 abgefangen und abgesaugt.

Der größte Teil des Koagulations- und Lösungsmittels wird durch die primären Entfeuchtungsvorrichtungen 9 abgesaugt. Dabei wird die Feuchtebeladung des Spinnvlieses 8 soweit reduziert, dass der Anteil an Flüssigkeit im Spinnvlies 8 nach der Entfeuchtungsvorrichtungen 9 im Bereich von 0,1 kg/kg bis 10kg/kg, bevorzugt 1 kg/kg bis 8 kg/kg, noch mehr bevorzugt zwischen 3 kg/kg und 6 kg/kg liegt.

Ein kleiner Teil der Koagulations- und Lösungsmittelmenge wird auch über die sekundären Entfeuchtungsvorrichtung 12 abgesaugt. Das Lösungsmittel sammelt sich sowohl bei der primären Entfeuchtungsvorrichtung 9, als auch bei den sekundären Entfeuchtungsvorrichtungen 12 am tiefsten Punkt und wird über die Entwässerungsleitung 15 zum Koagulationsvorlagebehälter 17 abgeleitet.

Der größte Teil der Prozessluft 5 wird reflektiert und über die Absaugvorrichtungen (MD/CD-Boxen) 10,11 abgeleitet. Die MD/CD-Boxen 10,11 verfügen beispielsweise über speziell geformte Leitbleche, die es ermöglichen, die reflektierte Prozessluft besser abzuführen (nicht näher dargestellt). Zwischen den MD-Boxen 11 und dem Förderband 7 ist ein Spalt, damit das Förderband 7 und das Spinnvlies 8 dazwischen transportiert werden können. Die sekundären Entfeuchtungsvorrichtungen 12 befinden sich unter den MD-Boxen 11 und halten das Spinnvlies 8 fest.

Die primäre Entfeuchtungsvorrichtung 9 und die sekundäre Entfeuchtungsvorrichtung 12 können als ein Apparat oder getrennt ausgeführt sein.

Die oberen Absaugvorrichtungen 10,11 können als ein Apparat oder getrennt ausgeführt sein.

Die primäre Entfeuchtungsvorrichtung 9, die sekundäre Entfeuchtungsvorrichtung 12 und die Absaugvorrichtungen können jeweils durch eine eigene Absaugleitung 13 mit Abscheider 16 und Vakuumgebläse oder mit einer gemeinsamen Vakuumleitung versorgt werden. Dazwischen sind auch andere Variationen möglich.

Die verwendeten Abscheider können beispielsweise Tropfenabscheider sein, aber auch andere Abscheidevarianten sind möglich.

Es können mehrere erfindungsgemäße Vorrichtungen hintereinander positioniert werden, um mehrlagige Spinnvliese zu erzeugen. Dabei dient die erste sekundäre Entfeuchtungsvorrichtung 12 in Förderrichtung der Fixierung des bereits abgelegten Spinnvieses 8, damit es nicht durch die reflektierte Prozessluft 5 des nächsten Spinnsystems 2 beschädigt wird.

In einer Ausführungsvariante kann die Fördervorrichtung 7 eine rotierende, perforierte Vakuumtrommel aufweisen, um das Spinnvlies abzulegen, zu entfeuchten und weiter zu transportieren. Erfindungsgemäß kann der Reflexionseffekt dann durch entsprechende Anpassung der Absaugvorrichtungen 10,11 für die Entfernung der Prozessluft an die Vakuumtrommel ausgenutzt werden. Die rotierende Vakuumtrommel kann eine Ablagefläche mit primärer Entfeuchtungsvorrichtung und Vlieshaltebereiche unter den Absaugvorrichtungen mit sekundären Entfeuchtungsvorrichtungen ausweisen (nicht dargestellt).

## Patentansprüche

1. Vorrichtung zum Ablegen von Filamenten (3) zu einem Spinnvlies (8), Entfeuchten des Spinnvlieses (8) und Absaugung der mit Lösungs- und Koagulationsmittel beladenen Prozessluft, umfassend eine Fördervorrichtung (7) zum Transport des Spinnvlieses (8) in eine Transportrichtung,
wobei die Fördervorrichtung (7) eine Ablagefläche (6) für das Filament (3) aufweist,
wobei die Fördereinrichtung (7) zumindest im Bereich der Ablagefläche (6) durchlässig für Gase und Flüssigkeiten ist,
wobei unterhalb der Ablagefläche (6) der Fördervorrichtung (7) eine primäre Entfeuchtungsvorrichtung (9) vorgesehen ist,
**dadurch gekennzeichnet, dass** vor und/oder nach und/oder seitlich der Ablagefläche (6) zumindest eine obere Absaugvorrichtung (10, 11) angeordnet ist.

2. Vorrichtung nach Anspruch 1, **dadurch gekennzeichnet, dass** die obere Absaugvorrichtung (11) im Betrieb eine Absaugrichtung in Transportrichtung oder gegen Transportrichtung oder in und gegen Transportrichtung, in Richtung der Ablagefläche (6), aufweist.

3. Vorrichtung nach Anspruch 1 oder Anspruch 2, **dadurch gekennzeichnet, dass** die obere Absaugvorrichtung (10) im Betrieb eine Absaugrichtung quer zur Transportrichtung, in Richtung der Ablagefläche (6), aufweist.

4. Vorrichtung nach einem der Ansprüche 1 bis 3, **dadurch gekennzeichnet, dass** jeder Absaugvorrichtung in Maschinenrichtung (11) eine sekundäre Entfeuchtungsvorrichtung (12) zugeordnet ist.

5. Vorrichtung nach einem der Ansprüche 1 bis 4, **dadurch gekennzeichnet, dass** die sekundäre Entfeuchtungsvorrichtung (12) unter Vakuum betreibbar ist.

6. Vorrichtung nach einem der Ansprüche 1 bis 5, **dadurch gekennzeichnet, dass** die obere Absaugvorrichtung (11) in Transportrichtung vor der Ablagefläche (6) angeordnet ist.

7. Vorrichtung nach einem der Ansprüche 1 bis 6, **dadurch gekennzeichnet, dass** die obere Absaugvorrichtung (11) in Transportrichtung nach der Ablagefläche (6) angeordnet ist.

8. Anordnung, umfassend eine Vorrichtung zur Herstellung von cellulosischen Filamenten und eine Vorrichtung nach einem der Ansprüche 1 bis 7.

9. Verfahren zum Ablegen von Filamenten (3) zu einem Spinnvlies (8), Entfeuchten des Spinnvlieses (8), Absaugung der mit Lösungs- und/oder Koagulationsmittel beladenen Prozessluft, Abscheiden und Rückgewinnen des Koagulations- bzw. Lösungsmittels aus der Prozessluft, wobei Filamente (3) aus einem Spinnsystem (2) ausgetragen und auf einer Ablagefläche (6) einer Fördervorrichtung (7) zu einem Spinnvlies abgelegt und anschließend weitertransportiert werden, wobei die Filamente (3) auf der Ablagefläche (6) von der Unterseite der Fördervorrichtung (7) durch Verringern des Drucks entfeuchtet werden, **dadurch gekennzeichnet, dass** von der Fördervorrichtung (7) reflektierte Prozessluft zumindest in einem Abschnitt vor und/oder nach und/oder seitlich neben der Ablagefläche (6) oberhalb der Fördervorrichtung (7) abgesaugt wird.

10. Verfahren nach Anspruch 9, **dadurch gekennzeichnet dass** das Koagulations- bzw. Lösungsmittel aus dem Abluftstrom abgeschieden und rückgewonnen wird.

## Claims

1. A device for laying down filaments (3) into a spundbond fabric (8), dehumidifying the spundbond fabric (8) and sucking off the process air loaded with solvents and coagulants, including a conveyor device (7) for transporting the spundbond fabric (8) in a transport direction,
wherein the conveyor device (7) has a deposition surface (6) for the filament (3),
wherein the conveyor device (7) at least in a region of the deposition surface (6) is permeable for gases and liquids,
wherein underneath the deposition surface (6) of the conveyor device (7) there is provided a primary dehumidifying device (9),
**characterized in that** there is arranged at least one upper suction device (10, 11) upstream and/or downstream and/or laterally of the deposition surface (6).

2. A device according to claim 1, **characterized in that** the upper suction device (11) in operation has a suction direction in the transport direction or opposite to the transport direction or in and opposite to the transport direction towards the deposition surface (6).

3. A device according to claim 1 or claim 2, **characterized in that** the upper suction device (10) in operation has a suction direction transversely to the transport direction towards the deposition surface (6).

4. A device according to any of claims 1 to 3, **characterized in that** to each suction device in the machine direction (11) there is assigned a secondary dehumidifying device (12).

5. A device according to any of claims 1 to 4, **characterized in that** the secondary dehumidifying device (12) is operable under vacuum.

6. A device according to any of claims 1 to 5, **characterized in that** the upper suction device (11) is arranged in the transport direction upstream of the deposition surface (6).

7. A device according to any of claims 1 to 6, **characterized in that** the upper suction device (11) is arranged in the transport direction downstream of the deposition surface (6).

8. An assembly, including a device for producing cellulosic filaments and a device according to any of claims 1 to 7.

9. A method for laying down filaments (3) into a spundbond fabric (8), dehumidifying the spundbond fabric (8), sucking off the process air loaded with solvents and/or coagulants, respectively, separating and recovering the coagulant or solvent, respectively, from the process air, wherein filaments (3) are carried out of a spinning system (2) and layed down on a deposition surface (6) of a conveyor device (7) into a spundbond fabric and then further transported, wherein the filaments (3) on the deposition surface (6) are dehumidified from the bottom side of the conveyor device (7) by reducing the pressure, **characterized in that** process air reflected by the conveyor device (7) is sucked off at least in one section upstream and/or downstream and/or laterally next to the deposition surface (6) above the conveyor device (7).

10. A method according to claim 9, **characterized in that** the coagulant or the solvent, respectively, are discharged from the waste stream and then recovered.

## Revendications

1. Dispositif pour déposer des filaments (3) sur un non-tissé par filature (8), sécher le non-tissé par filature (8) et aspirer l'air de processus chargé de coagulant, comprenant un dispositif de convoyage (7) pour transporter le non-tissé par filature (8) dans un sens de transport,
dans lequel le dispositif de convoyage (7) comporte une surface de dépose (6) pour le filament (3),
dans lequel le dispositif de convoyage (7) est perméable aux gaz et aux liquides au moins dans la région de la surface de dépose (6) et
dans lequel un dispositif de séchage primaire (9) est prévu au-dessous de la surface de dépose (6) du dispositif de convoyage (7),
**caractérisé en ce qu'**au moins un dispositif de séchage supérieur (10, 11) est agencé devant et/ou derrière et/ou à côté de la surface de dépose (6).

2. Dispositif selon la revendication 1, **caractérisé en ce que** le dispositif de séchage supérieur (11) présente en mode de fonctionnement un sens de séchage dans le sens de transport ou opposé au sens de transport ou dans et opposé au sens de transport, en direction de la surface de dépose (6).

3. Dispositif selon la revendication 1 ou la revendication 2, **caractérisé en ce que** le dispositif de séchage supérieur (10) présente en mode de fonctionnement un sens de séchage transversal au sens de transport, en direction de la surface de dépose (6).

4. Dispositif selon une des revendications 1 à 3, **caractérisé en ce qu'**à chaque dispositif de séchage dans le sens machine (11) est associé un dispositif de déshumification secondaire (12).

5. Dispositif selon une des revendications 1 à 4, **caractérisé en ce que** le dispositif de déshumification secondaire (12) peut fonctionner sous vide.

6. Dispositif selon une des revendications 1 à 5, **caractérisé en ce que** le dispositif de séchage supérieur (11) est agencé devant la surface de dépose (6) dans le sens de transport.

7. Dispositif selon une des revendications 1 à 6, **caractérisé en ce que** le dispositif de séchage supérieur (11) est agencé derrière la surface de dépose (6) dans le sens de transport.

8. Agencement comprenant un dispositif de fabrication de filaments cellulosiques et un dispositif selon une des revendications 1 à 7.

9. Procédé pour déposer des filaments (3) sur un non-tissé par filature (8), sécher le non-tissé par filature (8), aspirer l'air de processus chargé de solvant et/ou de coagulant, séparer et récupérer le coagulant ou le solvant de l'air de processus, selon lequel des filaments (3) sont extraits d'un système de filature (2) et déposés sur une surface de dépose (6) d'un dispositif de convoyage (7) vers un non-tissé, puis à nouveau transportés, les filaments (3) sur la surface de dépose (6) étant séchés en réduisant la pression de la face inférieure du dispositif de convoyage (7), **caractérisé en ce que** l'air de processus réfléchi par le dispositif de convoyage (7) est aspiré au moins dans une section devant et/ou derrière et/ou à côté de la surface de dépose (6) au-dessus du dispositif de convoyage (7).

10. Procédé selon la revendication 9, **caractérisé en ce que** le coagulant ou le solvant est séparé du flux d'air évacué et récupéré.
